# EUROPÄISCHE PATENTANMELDUNG

(11) **EP 2 112 122 A2**
(43) Veröffentlichungstag der Anmeldung: **28.10.2009**
(21) Anmeldenummer: 08022174.0
(22) Anmeldetag: 19.12.2008
(51) Int. Cl.: B67D 1/00, B67D 5/56, B01F 13/02

(54) **Behälter**

(30) Priorität: 16.04.2008 DE 102008019142
(71) Anmelder: RUDOLF WILD GmbH & CO. KG, 69214 Eppelheim (DE)
(72) Erfinder: Wild, Hans-Peter, Dr., 69214 Eppelheim (DE); Kasper, Rudolf, 69214 Eppelheim (DE); Hessenauer, Christoph, 69226 Nussloch (DE)
(74) Vertreter: Grünecker, Kinkeldey, Stockmair & Schwanhäusser Anwaltssozietät

(57) **Zusammenfassung**

Es wird ein Behälter (1) mit einer Wandung (2) beschrieben, durch die ein erster (A) und ein zweiter (B) Strömungsweg hindurchführt. Um Reinigungsvorgänge zu erleichtern wird vorgeschlagen, dass beide Strömungswege in einem Absperrmechanismus (8) vereinigt sind.

## Beschreibung

Die Erfindung bezieht sich auf einen Behälter der im Oberbegriff von Anspruch 1 erläuterten Art.

Ein derartiger Behälter ist aus der DE 198 25 611 A bekannt. Der bekannte Behälter dient zur Aufbewahrung und/oder zum Transport von fließfähigen Inhaltsstoffen, die eine Flüssigkeit und ggf. noch einen mehr oder weniger großen Anteil an Feststoffen umfassen. Derartige Inhaltsstoffe werden beispielsweise in Form von Getränkegrundstoffen in der Lebensmittelindustrie benötigt, die als Konzentrat aufbewahrt und transportiert werden und zum Herstellen von fertigen Getränken mit Wasser vermischt werden. Bei diesen mit Feststoffen versetzten Flüssigkeiten besteht das Problem einer zunehmenden Schwerkraftentmischung, d.h. die schwereren Feststoffteilchen setzen sich im unteren Bereich des Behälters ab. Um trotzdem ein homogenes Produkt abziehen zu können, sind die unterschiedlichsten Vorkehrungen zum Durchmischen der Inhaltsstoffe dieser Behälter bekannt. Der bekannte Behälter enthält zu diesem Zweck ein im unteren Bereich des Behälters oder in der Auslaufleitung vorgesehenes, zusätzliches Ventil, bevorzugt ein Tellerventil, durch das ein Druckgas in den Behälter zum Aufrühren der abgesetzten Feststoffe eingeblasen wird. Das Ventil befindet sich entweder im Behälterboden oder in Fließrichtung ober- bzw. unterhalb eines Auslassventils des Behälters, durch das die Inhaltsstoffe aus dem Behälter abgezogen werden. Trotz des Druckgases, der das Ventil von Produktresten freiblasen kann, ist es bei der bekannten Ausgestaltung nicht auszuschließen, dass beim Schließen des Gaseinlass-Ventils Produktreste doch hinter den Ventilteller gelangen und dort hängen bleiben. Eine Reinigung derartiger Tellerventile ist relativ aufwändig. Dadurch kann es bei unsachgemäßem Betrieb zu hygienischen Problemen kommen.

Der Erfindung liegt die Aufgabe zugrunde, einen Behälter der genannten Art bereitzustellen, der einfach und problemlos gereinigt werden kann.

Die Aufgabe wird durch die im Anspruch 1 angegebenen Merkmale gelöst.

Durch die erfindungsgemäße Ausgestaltung muss lediglich ein einziges Ventil gereinigt werden, was wesentlich einfacher zu bewerkstelligen ist.

Vorteilhafte Weiterbildungen der Erfindung sind den Unteransprüchen zu entnehmen.

Die beiden Strömungswege werden bevorzugt dadurch vorgesehen, dass das Ventil ein Schließglied für den ersten Strömungsweg aufweist und der zweite Strömungsweg das Schließglied umgeht.

Zum Absperren des zweiten Strömungsweges ist bevorzugt ein zweites Ventil vorgesehen, das jedoch im Abstand zum ersten Ventil angeordnet sein kann, so dass eine Verschmutzung des zweiten Ventils nicht zu befürchten ist.

Das beide Strömungswege vereinigende Ventil ist auf konstruktiv einfache Weise als Klappenventil auszubilden, das eine Schließklappe für den ersten Strömungsweg und einen für den zweiten Strömungsweg in der Achse der Schließklappe ausgebildeten Durchlasskanal enthält.

Bevorzugt ist der Durchlasskanal als Hohlwelle für das Schließglied ausgebildet.

Das Gas unter Druck wird bevorzugt über den zweiten Strömungsweg eingeleitet, um den ersten Strömungsweg, der einen größeren Querschnitt aufweisen kann, und der durch das Schließglied verschließbar ist, für die Inhaltsstoffe des Behälters zu verwenden.

Das erfindungsgemäße Ventil kann auf einfache Weise in einer Auslaufleitung des Behälters angeordnet werden, so dass auch in der Auslaufleitung verbliebenes Produkt durchmischt wird.

In einer konstruktiv besonders einfachen Ausgestaltung ist das gemeinsame Ventil als Klappenventil ausgebildet, das auch problemlos bei bestehenden Behältern nachgerüstet werden kann.

Ein Ausführungsbeispiel wird nachfolgend anhand der Zeichnungen näher erläutert. Es zeigen:
- Fig. 1: eine stark schematisierte Darstellung eines erfindungsgemäß ausgebildeten Behälters,
- Fig. 2: eine perspektivische Darstellung eines erfindungsgemäßen Klappenventils,
- Fig. 3: die Draufsicht auf das erfindungsgemäße Klappenventil, und
- Fig. 4: den Schnitt A-A aus Fig. 3.

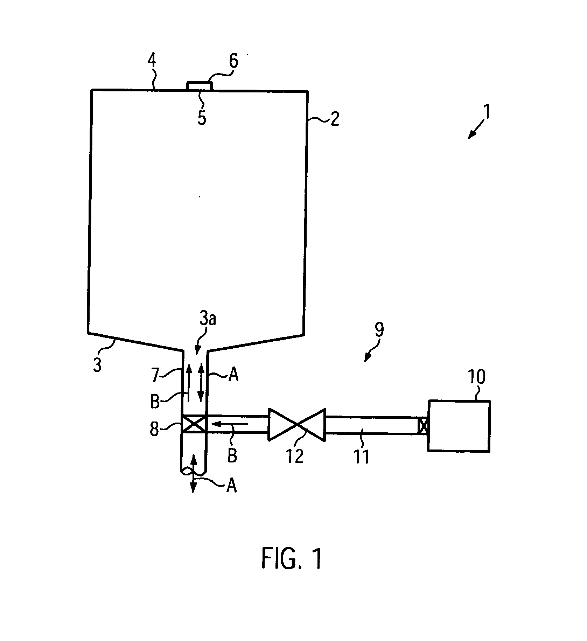

Fig. 1 zeigt in stark schematisierter Darstellung einen Behälter 1, der zum Transport und/oder zur Lagerung fließfähiger Inhaltsstoffe ausgebildet ist, die zur Entmischung neigen. Insbesondere ist der Behälter 1 im dargestellten Ausführungsbeispiel ein Transport- und Lagerbehälter für Lebensmittel, wie beispielsweise Fruchtzubereitungen oder Getränkegrundstoffe, die in einer wässrigen oder pasteusen Grundmasse Feststoffteilchen, wie beispielsweise Trübstoffe oder Fruchtstücke oder dergleichen enthalten, die zu Schwerkrafttrennung neigen, d.h. sich bei längerem Lagern im unteren Bereich des Behälters 1 absetzen können.

Der Behälter 1 enthält eine Seitenwandung 2, die bevorzugt zylindrisch oder quaderförmig ausgebildet ist, und nach unten hin durch einen bevorzugt trichterförmigen Boden 3 und nach oben durch eine Abdeckung 4 abgeschlossen ist. Der Behälter enthält weiterhin eine Entlüftungs- und/oder Druckabbauöffnung 5, die bevorzugt in der Abdeckung 4 ausgebildet ist und, wenn der Behälter 1 Lebensmittel oder sonstige verderbliche Inhaltsstoffe enthält, einen Filter 6 enthält.

Im trichterförmigen Boden 3 ist an dessen tiefster Stelle eine Öffnung 3a vorgesehen, durch die die Inhaltsstoffe aus dem Behälter 1 abgezogen werden und über die der Behälter 1 bevorzugt auch befüllt wird. Entleerung und Befüllung können jedoch auch durch unterschiedliche Öffnungen erfolgen.

An die Öffnung 3a ist eine Auslassleitung 7 angeschlossen, die mit einem Absperrmechanismus, bevorzugt einem Ventil 8 absperrbar ist. Das Ventil 8 kann an jeder beliebigen Stelle angeordnet sein, ist jedoch im vorliegenden Ausführungsbeispiel im Abstand zur Öffnung 3a vorgesehen, um den Ausbau zu Reinigungszwecken zu erleichtern. Die Inhaltsstoffe aus dem Behälter 1 strömen somit über einen ersten Strömungsweg A durch die Öffnung 3a, die Auslassleitung 7, das Ventil 8 in stromabwärts des Ventils 8 vorgesehene Einrichtungen bis zur Weiterverarbeitung der Inhaltsstoffe.

Der Behälter 1 ist weiterhin mit einer Einrichtung 9 zum Durchmischen der Inhaltsstoffe im Behälter 1 mittels Druckgas versehen. Die Einrichtung 9 enthält eine Druckgasquelle 10, die über eine Leitung 11 einen zweiten Strömungsweg B in das Innere des Behälters 1 schafft. Der zweite Strömungsweg B verläuft außer durch die Leitung 11 auch durch die Auslassleitung 7, so dass die gesamten Inhaltsstoffe oberhalb des Absperrmechanismus 8, die sich beim längeren Stehen schwerkraftbedingt mischen können, aufgewirbelt und durchmischt werden.

Die Leitung 11 mündet im Bereich des Absperrmechanismus 8 in die Auslassleitung 7. Zu diesem Zweck ist der Absperrmechanismus 8 so ausgebildet, dass er beide Strömungswege A und B vereinigt. Die Leitung 11 ist, bevorzugt im Abstand zu Einmündung in die Auslassleitung 7, mit einem zweiten Ventil 12 versehen.

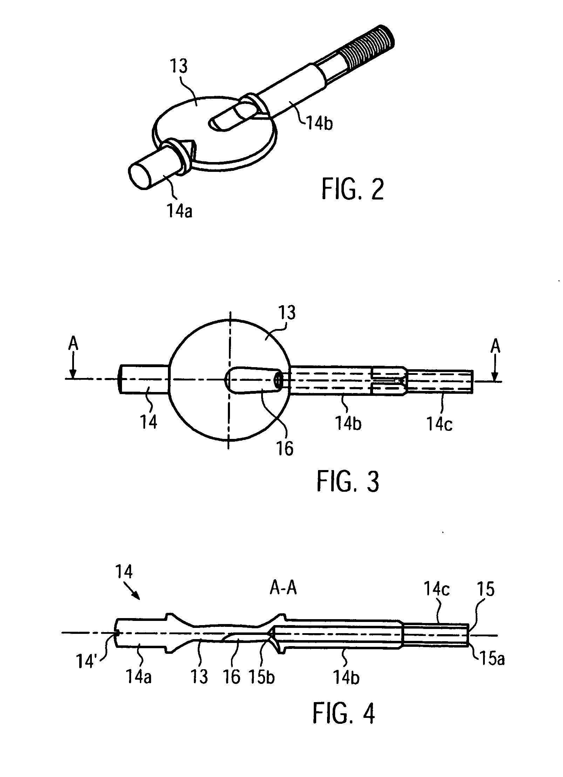

In den Figuren 2 bis 4 wird ein Ausführungsbeispiel eines Ventils 8 gezeigt, das diese Vereinigung der beiden Strömungswege A, B gestattet. Das Ventil 8 ist im dargestellten Ausführungsbeispiel als einfaches Klappenventil ausgebildet. Das Klappenventil enthält ein Schließglied 13, das als Schließplatte ausgebildet ist, deren Abmessung an die Abmessung eines nicht gezeigten Ventilsitzes angepasst ist, der sich im Inneren der Auslassleitung 7 befindet.

Das Schließglied 13 ist an diametral gegenüberliegenden Seiten mit Wellenstummeln 14a, 14b versehen, deren Mittellinie 14' durch den Verlauf des Schließgliedes 3 hindurch miteinander fluchten, und die in nicht dargestellten Drehlagern gelagert sind, so dass das Schließglied 13 um die Achse 14' zwischen einer Schließstellung, in der das Schließglied 13 den Querschnitt der Auslaufleitung absperrt in eine um 90° dazu versetzte, senkrechte Stellung verdrehbar ist, in der die Inhaltsstoffe beidseitig am Schließglied 13 vorbeiströmen können.

Die Welle 14, zumindest im Bereich eines der Wellenstummel 14b, ist mit einem Durchgangskanal 15 versehen, der sich von einer Einlassöffnung 15a an einem Anschluss-Stutzen 15c zum Anschließen der Leitung 11 (z.B. eines Schlauches) durch den Wellenstummel 14e bis in den Bereich des Schließgliedes 13 erstreckt und dort in einer Auslassöffnung 15b endet. Der Durchgangskanal 15 ist bevorzugt als Bohrung ausgebildet, die koaxial zur Mittellinie 14' verläuft.

Die Auslassöffnung 15b mündet über eine Strömungsmulde 16 an einer Flachseite des plattenförmigen Fließgliedes 13; und zwar an derjenigen Seite, die bei geschlossenem Ventil 8 in das Innere des Behälters 1 weist.

Durch die erfindungsgemäße Ausgestaltung ist es möglich, vor dem Öffnen des Ventils 8 zum Entnehmen einer vorbestimmten Menge an Inhaltsstoffen durch Öffnen des Ventils 12 einen Druckstoß mit Druckgas in den Behälter 1 einzuleiten, der die Inhaltsstoffe sowohl in der Auslassleitung 7 als auch im Behälter 1 aufwirbelt, durchmischt und durch Rückgängigmachung schwerkraftbedingter Trennungsvorgänge wiederum homogenisiert. Gleichzeitig wird eventuell in die Leitung 11 stromabwärts des zweiten Ventils 12 eingedrungenes Produkt ausgeblasen, so dass sich dort keine Produktreste ansammeln können und die Reinigung vereinfacht wird. Der überschüssige Druck wird anschließend durch die Öffnung 5 und den Filter 6 in der Abdeckung 4 abgebaut.

In Abwandlung des beschriebenen und bezeichneten Ausführungsbeispiels können anstelle des Klappenventils auch andere Ventilkonstruktionen eingesetzt werden, die zwei Strömungswege gestatten, wobei der eine Strömungsweg auch in Schließstellung des Ventils offen bleibt. Statt eines Ventils können andere geeignete Absperrmechanismen, wie beispielsweise Schieber oder dergleichen, eingesetzt werden.

## Patentansprüche

1. Behälter (1), mit einer Wandung (2, 3, 4), durch die ein erster und ein zweiter Strömungsweg (A, B) hindurchführt, **dadurch gekennzeichnet, dass** beide Strömungswege (A, B) in einem Absperrmechanismus (8) vereinigt sind.

2. Behälter nach Anspruch 1, **dadurch gekennzeichnet, dass** der Absperrmechanismus (8) ein Schließglied (13) für den ersten Strömungsweg (A) aufweist und der zweite Strömungsweg (B) das Schließglied (13) umgeht.

3. Behälter nach Anspruch 1 oder 2, **dadurch gekennzeichnet, dass** der zweite Strömungsweg (B) mit einem zweiten Absperrmechanismus (12) versehen ist.

4. Behälter nach einem der Ansprüche 1 bis 3, **dadurch gekennzeichnet, dass** der Absperrmechanismus (8) als Ventil ausgebildet ist.

5. Behälter nach Anspruch 4, **dadurch gekennzeichnet, dass** der Absperrmechanismus (8) ein Klappenventil mit einer Schließklappe (13) für den ersten Strömungsweg (A) und einer Welle (14) zum Verdrehen der Schließklappe (13) ist, und der zweite Strömungsweg (B) durch einen in der Welle (14) ausgebildeten Durchlasskanal (15) führt, der einen an einer Seite der Schließklappe (13) ausmündenden Auslass (15b, 16) aufweist.

6. Behälter nach Anspruch 5, **dadurch gekennzeichnet, dass** der Durchlasskanal (15) eine sich axial durch die Welle (14) erstreckende Bohrung aufweist.

7. Behälter nach Anspruch 5 oder 6, **dadurch gekennzeichnet, dass** der Durchlasskanal (15) einen axialen Einlass (15a) und einen axialen Auslass (15b) aufweist.

8. Behälter nach einem der Ansprüche 1 bis 7, **dadurch gekennzeichnet, dass** der erste Strömungsweg (A) als Ein- und/oder Auslass für fließfähige Inhaltsstoffe des Behälters (1) und der zweite Strömungsweg (B) zum Einleiten eines Gases zum Durchmischen der Inhaltsstoffe ausgebildet ist.

9. Behälter nach einem der Ansprüche 1 bis 8, **dadurch gekennzeichnet, dass** der Absperrmechanismus (8) in einer Auslaufleitung (7) des Behälters (1) angeordnet ist.

10. Klappenventil mit einer um eine Welle (14) verschwenkbaren Schließklappe (13), **dadurch gekennzeichnet, dass** durch die Welle (14) ein Durchlasskanal (15) hindurchführt und an einer Seite des Schließgliedes (13) ausmündet.
